# EUROPEAN PATENT SPECIFICATION

(11) **EP 2 954 985 B1**
(45) Date of publication and mention of the grant of the patent: **17.05.2023**
(21) Application number: 14749089.0
(22) Date of filing: 08.01.2014
(51) Int. Cl.: B25J 9/02, B25J 9/10

(54) **DELTA ROBOT FOR THE GUMMING OF LIDS**
DELTAROBOTER ZUM GUMMIEREN VON DECKELN
ROBOT DELTA POUR RÉALISER L'ENCOLLAGE DE COUVERCLES

(30) Priority: 08.02.2013 ES 201300141 U
(43) Date of publication of application: 16.12.2015
(73) Proprietor: Matriruiz, S.L., 30500 Molina de Segura (Murcia) (ES)
(72) Inventor: RUIZ GARCIA, Antonio, 30500 Molina de Segura (Murcia) (ES); RUIZ PUCHE, Juan José, 30500 Molina de Segura (Murcia) (ES)
(74) Representative: Ungria López, Javier
(86) International application number: PCT/ES2014/000003
(87) International publication number: WO 2014/122338

(56) References cited:
- EP-A1- 1 878 544
- EP-A1- 2 116 339
- EP-A1- 2 517 841
- WO-A1-2012/116991
- DE-A1-102008 019 966
- US-A1- 2011 259 138
- US-A1- 2012 171 383
- US-A1- 2012 171 383

## Description

### OBJECT OF THE INVENTION

The present invention refers to a delta robot, so that the advantages offered by this delta robot can be used for lining ends, thus resulting in a machine capable of lining shaped ends at a rate much higher than with traditional methods and with slightly higher performance levels.

More specifically, the mechanical means that are incorporated consist of replacing the three articulated arms of the traditional delta robot with others that incorporate precision bearings inserted into the arms through a bore made on the inside so that said bearings are flush with the bolt passing through the rod and thus form a joint that does not suffer from friction and has no play, conditions that are necessary to enable a process in which speed is one of the critical factors.

### SCOPE OF APPLICATION OF THE INVENTION

The present invention will find application in the manufacture of all kinds of metal containers, where the ends have to be lined before they are finally fitted to the container.

Owing to the specifications of the present invention, it will also be possible to find applications in many different types of industrial processes that have in common the need for high speed and high precision.

### BACKGROUND OF THE INVENTION

The lining process is defined herein as the application on the seaming panel or bottom of a metal end (regardless of its geometry) of a bead of rubber which is subsequently dried in an oven to a plastic consistency that acts as a seal, ensuring the container is sealed once it is closed.

At present, the machines that perform lining work on ends for the canning industry are found on the market in three types:
- Die stamping, where the ends are placed against one or more dies having the shape of the perimeter of the end and which are dipped in a vessel containing the rubber. The die presses on the end and leaves the bead ready for drying in the oven.
   Such machines usually suffer from significant problems in that the rubber usually dries in the dies and very often stains the end, requiring thorough cleaning maintenance.
- Shower, where the die in this case acts as a shower on the seaming of the end. It has a series of small adjacent holes forming the shape of the end, obstructed by needles that insert small drops on the end as they are moved. The shower is supplied from a pressurised main tank. The application quality of this type of machine is better than the previous system. However, maintenance is more complex due to the problems that arise in the previous system.
- Injection with a cam tracker when the application is on a shaped end. This is performed by dropping a bead of rubber through a small-diameter nozzle supplied from a pressurised circuit via a cam trackers or a mechanical tracker the same shape as the end to enable the correct distribution of the rubber.

Such machines require careful control of the state of the nozzle, as in a few hours, blockages form that prevent the passage of the rubber and cause the ends to be placed in the oven before the bead has been applied, thus rendered unusable. As the tracking is via cam, the rubber is applied inconsistently around the perimeter.

Another of the major problems facing the end-lining industry is the change of format. For each machine, a specific format has to be designed, creating complex, inflexible mechanical parts for each end format change, which will require stopping and disassembling the machine and replacing the part.

As a result of the above, a machine is required that is capable of lining ends without the need for expensive maintenance and which in turn allows it to be adapted to any format and avoid the aforementioned need for disassembly and replacement of parts.

The use of a delta robot with an injection gun, as disclosed in US 2012/0171383 A1, automates maintenance, enables the correct application of the rubber and adapts to any end format by simply modifying the programming of its controller.

The delta robot is widely known today since it was created in the mid-1980s. It consists of three articulated arms with three servomotors attached at the end to a part (usually a clip) so that it can be moved smoothly and in a coordinated way to position the part at any coordinate of the robot's workspace. The problem with the end-lining application is that the system is based on friction bearings, which work at high speed and make continuous movements, heating up and suffering from premature wear and tear.

EP 1 878 544 A1 discloses a delta robot with symmetrical pairs of arms connected at their ends by a central bolt joined to stops connected to each arm end by two respective bearings joined by a shaft.

### DESCRIPTION OF THE INVENTION

In order to solve the above problem, the present invention provides a delta robot as defined in claim 1.

A lining machine provided with such a delta robot applies the bead using an injection gun, where the robot programming includes the path to be covered by the gun, so that the injection system is extended to ends of any shape, not only round ones. The program also includes, at certain intervals of time, automatic cleaning of the gun tip and a purge program that cleans the entire gun when the machine stops, guaranteeing the cleaning of the equipment and thereby ensuring correct operation without the need for maintenance by an operator.

The mechanical assembly provided for the lining of ends by a delta robot comprises in broad terms three mechanical articulations connected at their upper ends to each of the respective servomotors with the platform supporting the injection gun that applies the bead of rubber to the ends at the lower end thereof.

The articulations consist of a pair of arms whose ends have been machined to accommodate a stop articulated by a shaft running through it, resting on a pair of bearings arranged symmetrically on the faces of the machined sections. The bore made to accommodate the bearings has been done from the inside of the machining out so that, once inserted, the bearing is flush against the outer face of the end of the arm. Thus, each arm is joined to another symmetric rod by a pin with through-holes for the abovementioned shafts. At the lower end, they support the platform for the injection gun, while at the top they connect to the rods coupled to the delta robot servomotors. This connection is made using a reductive flange that transmits the movement of the servomotor to the rod.

The rods are also connected by the same shaft that joins the servomotors to safety cams positioned to limit the movements of the arms, preventing failure in the event of any faults arising from excessive movement of the equipment.

The platform for the injection gun is composed of three ends positioned at an angle of 120° to each other, with each one having a through-hole with the bolt that joins the lower ends to the arms. In the centre, a hole has been made for the base of the injection gun.

The injection gun will consist of a body that sits on the platform and ends in a nozzle that crosses said platform and protrudes at the bottom. The gun body has the holes needed to connect the pipes to supply the rubber.

On the bench on which the various elements described in the preceding paragraphs are fixed, there will be a plate with a central hole through which the bead of rubber will be applied to the ends supplied by the feeder. Said hole will be of sufficient size for lining the largest ends that are to be processed. Said plate will house a wire brush for cleaning the nozzle, so that when programmed, the gun will be displaced to said brush and the necessary movements will be made to clean the nozzle and thereby remove any traces of dry rubber that may obstruct the outlet.

The delta robot servomotors will be supported by a base plate positioned at the top, supported by three pillars each positioned at an angle of 120°. Finally, the entire unit will be contained in a safety enclosure to prevent accidental access to the moving parts of the machine and the penetration of foreign elements in the lining process.

Another important advantage of the present invention is the possibility of incorporating the unit and the delta robot into any traditional lining machine, so that the elements that perform the lining are replaced but the other parts can still be used too, such as the feeder or the drying oven. Thus, the implementation of the machine in a factory is cheaper and also allows the use of discarded machinery.

### DESCRIPTION OF THE DRAWINGS

To complement the description that is being made and in order to facilitate better understanding of the specifications of the invention, illustrative, non-restrictive drawings are included as an integral part of this memorandum, described as follows:
Fig. 1 showing a perspective view of the unit incorporating the delta robot. This drawing and the following do not show the flexible pipe that carries the rubber to the gun, leaving out said element to facilitate understanding of the drawing.

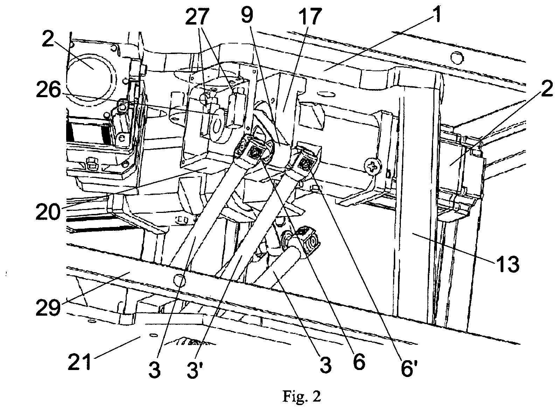

Fig. 2 showing a detail view of the connection through the rod and a support flange for the servomotor of the delta robot and the arms.

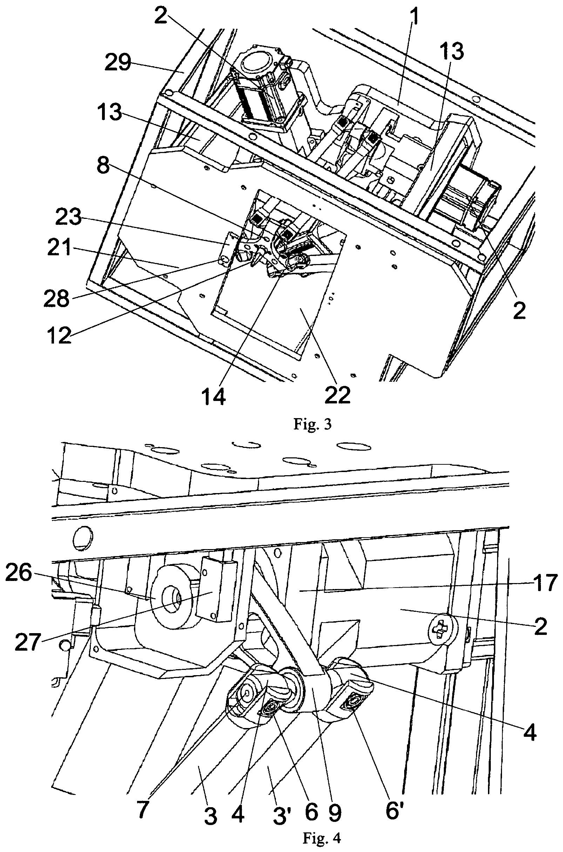

Fig. 3 showing the unit from a bottom view, representing the hole for the ends and, through the hole, the rubber injection gun.
Fig. 4 showing another view with the safety cam that prevents arm movements outside a certain range. It also shows the coupling of the servomotor with the arms.

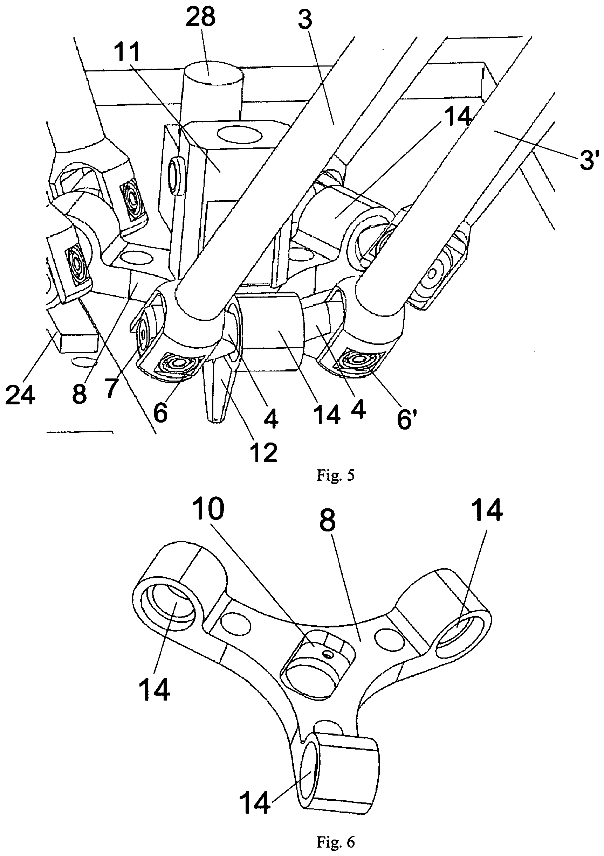

Fig. 5 showing the coupling of the arms with the platform through a set of bearings, shafts, bolts and stops equal to those of the upper part of the arm.
Fig. 6 showing the platform on which the injection gun is positioned.

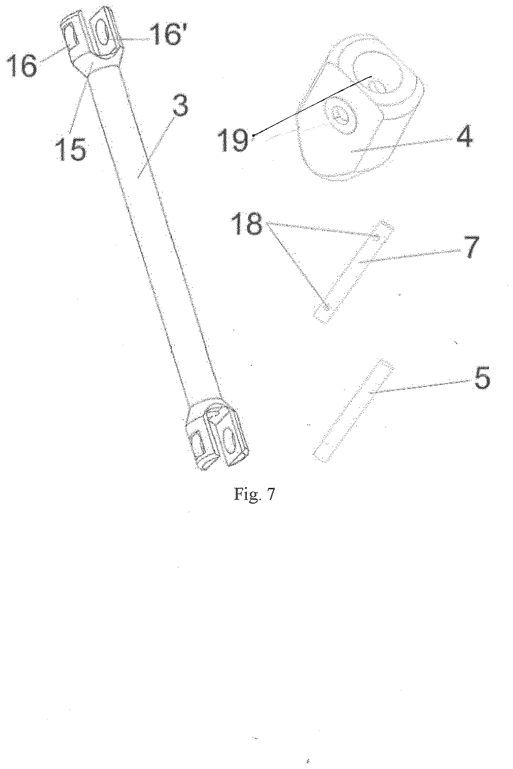

Fig. 7 showing a separate arm, with a clearer view of the inner bore that has been made. It also shows a stop, which is inserted in the machined section and, through the corresponding hole, a shaft has been inserted, connecting it to the rod or platform, depending on the end of the arm, where said shaft has the holes for the bolts that connect the bearings fitted in the inner bores. It is noted that the different parts shown are not on the same scale, but rather have been expanded in varying degrees for easy viewing.

### DESCRIPTION OF THE PREFERRED REALISATION

In view of the aforementioned figures and according to the numbering system that is adopted, they show a preferred realisation of the invention, which comprises the parts and elements indicated and described in detail below, where this example does not aim to limit the scope thereof in any way.

The unit is anchored to a base plate (1) which in turn is supported by three pillars (13) positioned with an angular spacing of 120° between each one, so that there is space for positioning the remaining elements of the set of mechanical means for lining ends between said pillars (13).

Thus, three servomotors (2) are positioned in the traditional delta robot configuration (120° separation between each one) anchored at the bottom of the base plate (1) by their respective support flanges (17). The axles of the servomotors (2) are joined to rods (9) by means of conical couplings, which in turn transmit movement to the arms (3, 3') through a bolt (7) that passes through two separate stops (4) via a through-hole (19) of the stops (4), and the bolt (7) is connected to bearings (6, 6') thanks to shafts (5) joining said bearings (6, 6') through respective shaft holes (18) in the bolt (7).

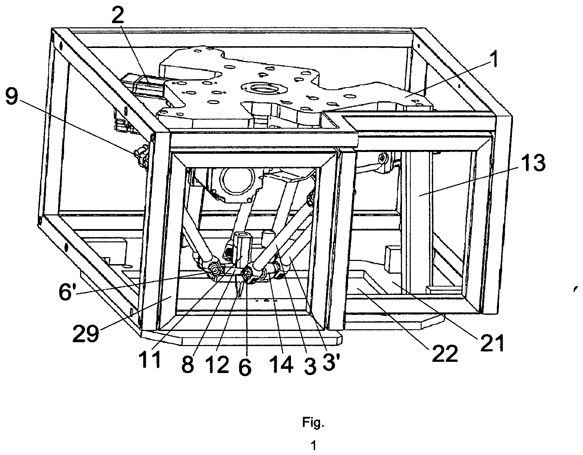

As shown in Figure 1, the robot comprises a pair of arms (3, 3') whose ends have a machined section (15) with rectangular geometry housing the stop (4) which secures the connection with the bolt (7). The bearings (6, 6') are inserted on both sides of the machined section (15) through a bore (16) made in the machined section so that the bearings (6, 6') are flush against the outer wall of the arm. This ensures a robust coupling without gaps capable of withstanding high movement speeds without wear and tear.

The connection between the rod (9) and the arms (3, 3') will also have a lateral connection with a safety cam (26) whose mission is to accompany the movement of the rod (9) and limit the range of the arm movement, so that for any unexpected situation, excessive movements that may break the unit are avoided. The safety cam (26) will have safety stops (27) that restrict the range of rotation of said safety cam (26). The safety cam (26) is positioned in a casing box (20) which separates it from the other elements.

The coupling of the arms (3, 3') by means of a pin (7) and stops (4) is repeated at both the top and the bottom. At the bottom, it is attached to the platform (8), which has three ends arranged with a 120° separation between each one and they all have a through-hole (14) for the bolt (7). In the centre of the platform, there is another hole for positioning the gun (10) which will house the injection gun body (11), into which the rubber will be fed under pressure for it to come out at the injector nozzle (12).

The pillars (13) supporting the base plate (1) will be positioned on a bottom plate (21) with a central hole (22) of sufficient size to allow access by the injector nozzle (12) to the ends the feeder will position under said central hole (22). Thus, it will only be necessary to mount the bottom plate (21) on the bench of any machine using the systems referred to in the background section from which the lining parts have been removed to enable the implementation of the unit described in this memorandum, with the aforementioned benefits this entails.

The bottom plate (21) will also have a base (23) for a wire cleaning brush (24). A self-cleaning process programmed into the robot moves the injection nozzle (12) to the position of the cleaning brush (24). By means of a repetitive movement, it applies pressure to the brush (24) and the nozzle (12) is cleaned completely, preventing obstructions that could cause deviations on the rubber outlet, staining the cover. Once the nozzle has been cleaned (12), it will move to a drain (28) for automatic purge so that the process can be resumed with all elements completely clean. Also, before a stop or a shift change during which the lining operation is expected to stop for an extended period, the nozzle (12) will be moved to the drain (28) and a jet of treated water will be passed through it to completely clean the inside of the gun body (11) and the injector nozzle (12), leaving both completely clean and ready for a restart when required.

The gun body (11) will have connections for the inlet pipe for the injected rubber. The pipe will be flexible and long enough to follow the movements of the platform (8) without interruption.

The entire unit described above will be covered by a protective casing (29) to prevent the penetration of foreign particles in the process and accidental access by workers to the moving parts of the mechanisms. Said casing (29) will also rest on the bottom plate (21).

Having described the nature of this invention sufficiently, together with its implementation, it is not considered necessary to give a further explanation for any expert in the art to understand its scope and the benefits it provides, stating that, in its essence, it may be implemented via other realisations that differ in detail from that indicated by way of example, and **which** will also offer the protection indicated as long as it does not depart from the scope of the appended claims.

## Claims

1. DELTA ROBOT FOR LINING ENDS comprising three servomotors (2) positioned with an angular spacing of 120° the output of each the servomotor being provided with a conical coupling connected to *rod (9)* which in turn transmits the movement to the upper end of a symmetrical pair of arms (3, 3') connected by means of a bolt (7) which passes through the rod (9) via a through-hole in said rod and through two separate stops (4) via a through-hole (19)in said stops, the bolt being connected to bearings (6, 6') by shafts (5) that join said bearings (6, 6') through respective shaft holes (18) in said bolt (7), the ends of the arms (3, 3') being provided on opposite sides with a machined section (15) with rectangular geometry, said bearings (6,6') being inserted on each machined section (15) through a bore(16) made in said machined section from the inside out, so that the hole is not complete and the bearings (6,6') abut the outer wall of the arm; the coupling of the arms (3, 3') by a bolt (7) and stops (4) being repeated at the lower end of the arms, this time to form the articulation with a platform (8), which has three ends positioned with a 120° angular spacing between each one, with a through-hole (14) for the bolt (7).

2. *DELTA ROBOT* FOR LINING ENDS according to claim 1, **characterised in that** the top rod (9) connecting to the arms (3, 3') has a lateral connection to a safety cam (26) that rotates with the top rod (9) and will be accompanied by safety stops (27) that limit the range of rotation of said safety cam (26).

3. *DELTA* ROBOT FOR LINING ENDS according to claim 1, **characterised in that** in the centre of the platform (8), there is another hole for positioning the gun (10) which will house the injection gun body (11), into which the rubber will be fed under pressure for it to come out at the injector nozzle (12).

4. *DELTA* ROBOT FOR LINING ENDS according to claim 3, **characterised in that** the bottom plate (21) has a central hole (22) of sufficient size to allow access by the injector nozzle (12) to the ends the feeder will position under said central hole (22); also having a fastening section (23) for a wire brush (24) to ensure the cleaning of the nozzle (12) and a drain (28).

## Patentansprüche

1. DELTA-ROBOTER ZUM AUSKLEIDEN VON ENDEN mit drei Servomotoren (2), die mit einem Winkelabstand von 120° angeordnet sind, wobei der Ausgang jedes Servomotors mit einer konischen Kupplung versehen ist, die mit der Stange (9) verbunden ist, die ihrerseits die Bewegung über ein Durchgangsloch in der Stange und durch zwei getrennte Anschläge (4) über ein Durchgangsloch (19) in den Anschlägen überträgt, wobei die Lager (6,6 ') an jedem bearbeiteten Abschnitt (15) durch eine Bohrung (16) verbunden sind, die in dem bearbeiteten Abschnitt von der Innenseite her hergestellt ist, so dass das Loch nicht vollständig ist und die Lager (6,6 ') an der Aussenwand des Arms anliegen; wobei die Kopplung der Arme (3, 3') durch einen Bolzen (7) und Anschläge (4) am unteren Ende der Arme wiederholt wird, wobei diese Zeit die Anlenkung mit einer Plattform (8) bildet, die drei mit einem 120° - Winkelabstand zueinander positionierte Enden mit einem Durchgangsloch (14) für den Bolzen (7) aufweist.

2. DELTA-ROBOTER ZUM AUSKLEIDEN VON ENDEN nach Anspruch 1, **dadurch gekennzeichnet, dass** die mit den Armen (3, 3') verbundene obere Stange (9) eine seitliche Verbindung zu einem mit der oberen Stange (9) rotierenden Sicherheitsnocken (26) aufweist, der von Sicherheitsanschlägen (27) begleitet wird, die den Drehbereich des Sicherheitsnockens (26) begrenzen.

3. DELTA-ROBOTER ZUM AUSKLEIDEN VON ENDEN nach Anspruch 1, **dadurch gekennzeichnet, dass** in der Mitte der Plattform (8) ein weiteres Loch zum Positionieren der Pistole (10) vorhanden ist, die den Spritzpistolenkörper (11) beherbergt, in den der Gummi unter Druck zugeführt wird, damit dieser an der Injektordüse (12) austritt.

4. DELTA-ROBOTER ZUM AUSKLEIDEN VON ENDEN nach Anspruch 3, **dadurch gekennzeichnet, dass** die Bodenplatte (21) ein zentrales Loch (22) von ausreichender Grösse aufweist, um einen Zugang durch die Injektordüse (12) zu den Enden zu ermöglichen, die der Speiser unter dem zentralen Loch (22) positionieren wird; ausserdem mit einem Befestigungsabschnitt (23) für eine Drahtbürste (24), um die Reinigung der Düse (12) und eines Ablaufs (28) sicherzustellen.

## Revendications

1. ROBOT DELTA POUR L'HABILLAGE DES EXTRÉMITÉS comprenant trois servomoteurs (2) positionnés avec un espacement angulaire de 120°, la sortie de chaque servomoteur étant pourvue d'un accouplement conique relié à une tige (9) qui à son tour transmet le mouvement à l'extrémité supérieure d'une paire symétrique de bras (33,3') reliés au moyen d'un boulon (7) qui passe à travers la tige (9) par l'intermédiaire d'un trou traversant dans ladite tige et à travers deux butées séparées (4) par l'intermédiaire d'un trou traversant (19) dans lesdites butées, le boulon étant relié à des paliers (6, 6') par des arbres (5) qui relient lesdits paliers (6, 6') à travers des trous d'arbre respectifs (18) dans ledit boulon (7), les extrémités des bras (33,3') étant disposées sur des côtés opposés avec une section usinée (15) à géométrie rectangulaire, lesdits paliers (6,6 ') étant insérés sur chaque section usinée (15) à travers un alésage (16) ménagé dans ladite section usinée depuis l'intérieur, de telle sorte que le trou n'est pas complet et les paliers (6,6 ') viennent en butée contre la paroi externe du bras; le couplage des bras (33,3') par un boulon (7) et des butées (4) étant répétées à l'extrémité inférieure des bras, ce temps pour former l'articulation avec une plate-forme (8), qui a trois extrémités positionnées avec un espacement angulaire de 120 ° entre chacun, avec un trou traversant (14) pour le boulon (7).

2. ROBOT DELTA POUR L'HABILLAGE DES EXTRÉMITÉS selon la revendication 1, **caractérisé en ce que** la tige supérieure (9) reliée aux bras (33,3') a une liaison latérale avec une came de sécurité (26) qui tourne avec la tige supérieure (9) et sera accompagnée par des butées de sécurité (27) qui limitent la plage de rotation de ladite came de sécurité (26).

3. ROBOT DELTA POUR L'HABILLAGE DES EXTRÉMITÉS selon la revendication 1, **caractérisé en ce que**, au centre de la plate-forme (8), il y a un autre trou pour positionner le pistolet (10) qui loge le corps de pistolet d'injection (11), dans lequel le caoutchouc sera amené sous pression pour qu'il sort au niveau de la buse d'injecteur (12).

4. DELTA POUR L'HABILLAGE DES EXTRÉMITÉS selon la revendication 3, **caractérisé en ce que** la plaque inférieure (21) a un trou central (22) de taille suffisante pour permettre l'accès par la buse d'injecteur (12) aux extrémités du dispositif d'alimentation en position sous ledit trou central (22); ayant également une section de fixation (23) pour une brosse à fil (24) pour assurer le nettoyage de la buse (12) et un drain (28).
